# DEMANDE DE BREVET EUROPEEN

(11) **EP 2 525 142 A2**
(43) Date de publication de la demande: **21.11.2012**
(21) Numéro de dépôt: 12167603.5
(22) Date de dépôt: 11.05.2012
(51) Int. Cl.: F21V 5/00, F21S 8/12, F21Y 101/02, F21Y 105/00, F21W 101/10

(54) **Unité d'optique, notamment pour véhicule automobile**

(30) Priorité: 17.05.2011 FR 1154297
(71) Demandeur: VALEO VISION, 93012 Bobigny (FR)
(72) Inventeur: de Lamberterie, Antoine, 75019 Paris (FR); Meyrenaud, Jean-Luc, 93190 Livry Gargan (FR)

(57) **Abrégé**

L'invention concerne une unité optique (1), notamment pour véhicule automobile, comportant :
- au moins une lentille (2) comportant un dioptre d'entrée (3) et un dioptre de sortie (4),
- au moins une source de lumière (5) capable d'émettre de la lumière vers le dioptre d'entrée (3) de la lentille (2),
- au moins un cache (6) pour occulter de la lumière provenant de la source (5) et disposé entre la source (5) et le dioptre d'entrée (3) de la lentille (2),.

Selon l'invention, la lentille (2) présente un foyer objet (F) situé sensiblement sur le dioptre d'entrée (3) de la lentille (2).

## Description

L'invention concerne notamment une unité optique, notamment pour un véhicule automobile.

On connaît par le brevet US 7 204 627 une unité optique pour un véhicule automobile comportant une lentille et une LED placée en regard du dioptre d'entrée de la lentille et dont le bord inférieur est situé sur le foyer objet de la lentille.

Cette unité optique vise à produire un faisceau de lumière présentant une coupure rectiligne, cette coupure étant une frontière séparant une zone éclairée par ce faisceau et une zone sombre non éclairée par ce faisceau.

Cette coupure présente en général une forme imposée par la réglementation.

Dans la pratique, différentes formes de coupure sont utilisées.

Par exemple, un faisceau de croisement présente une coupure permettant de ne pas éblouir un véhicule venant d'en face.

Ce type de coupure code est agencé par exemple pour respecter la réglementation R112.

Un faisceau anti-brouillard présente une coupure plate.

Il existe un besoin pour réaliser une unité optique qui, tout en restant compacte et simple, permet de produire un faisceau avec une coupure souhaitée, par exemple de type code ou de tout autre type.

L'invention vise notamment à répondre au besoin précité.

L'invention a ainsi pour objet une unité optique, de préférence pour véhicule automobile, notamment appartenant à un dispositif d'éclairage et/ou de signalisation, cette unité optique comportant :
- au moins une lentille comportant un dioptre d'entrée et un dioptre de sortie,
- au moins une source de lumière capable d'émettre de la lumière vers le dioptre d'entrée de la lentille,
- au moins un cache agencé pour occulter de la lumière provenant de la source et disposé entre la source et le dioptre d'entrée de la lentille,
l'unité étant **caractérisée en ce que** la lentille comporte un foyer objet disposé sensiblement sur le dioptre d'entrée de la lentille.

Grâce à l'invention, il est possible de réaliser simplement une unité optique présentant un faible encombrement.

Dans un exemple de mise en oeuvre de l'invention, la lentille présentant un axe optique, le tirage de la lentille, c'est-à-dire la distance entre le dioptre d'entrée et le foyer objet de la lentille, est inférieur à l'épaisseur de la lentille mesurée sur l'axe optique.

Par exemple, le tirage de la lentille est inférieur à un cinquième ou un dixième de l'épaisseur de la lentille, voire un vingtième de cette épaisseur.

Dans un exemple préféré de mise en oeuvre de l'invention, la majeure partie, c'est-à-dire plus de 50%, de la lumière provenant de la source, voire 90% de cette lumière, atteint directement la lentille, sans être occultée par le cache.

De préférence, la source de lumière et la lentille sont agencées de manière à ce que les rayons lumineux provenant de la source et atteignant la lentille se propagent en ligne droite, à savoir ces rayons ne subissent pas de réflexions sur leur trajet entre la source et la lentille.

Par exemple, l'unité est dépourvue de collecteur optique, notamment de collecteur en forme de portion d'ellipsoïde, associé à la source de lumière.

Ceci offre l'avantage d'améliorer encore la compacité et la simplicité de l'unité.

Si on le souhaite, la source de lumière peut être disposée à proximité du cache.

Par exemple la distance séparant la source du cache peut être inférieure à 10 mm, voire inférieure à 5 mm ou 3 mm.

Dans un exemple de mise en oeuvre de l'invention, le cache comporte au moins un bord de coupure contenu dans ou coupant le plan focal de la lentille.

On entend par bord de coupure du cache au moins une arête du cache agencée pour produire une coupure dans un faisceau de lumière produit par l'unité.

Dans un exemple de mise en oeuvre de l'invention, la lentille est agencée de manière à ce que des rayons lumineux contenus dans un plan vertical, émis par la source de lumière et atteignant le foyer objet de la lentille, soient transmis à travers la lentille et la quittent de manière parallèle dans un plan vertical.

Autrement dit, les rayons qui quittent la lentille sont, dans un plan vertical, parallèles entre eux.

Il est ainsi possible de réaliser une coupure nette dans le faisceau de lumière produit par l'unité.

Si on le souhaite, le cache comporte un seul bord de coupure.

Le cas échéant, ce bord de coupure passe par le foyer objet de la lentille.

Eventuellement, ce bord de coupure est formé par une arête rectiligne du cache.

Ce bord de coupure permet par exemple de produire une coupure plate dans le faisceau de lumière, pour par exemple participer à la production d'un éclairage anti-brouillard.

En variante, ce bord de coupure peut être formé par une arête courbe du cache.

Dans un autre exemple de réalisation de l'invention, le bord de coupure peut être formé par au moins deux arêtes jointives, par exemple toutes deux rectilignes.

Ces deux arêtes jointives peuvent former entre elles un angle droit pour produire une coupure de type 'L' dans le faisceau.

En variante, ces deux arêtes peuvent former entre elles un angle aigu.

En variante encore, ces deux arêtes peuvent former entre elles un angle obtus pour produire une coupure de type 'croisement' dans le faisceau, afin de participer par exemple à la production d'un éclairage de croisement.

Le cas échéant, la jonction de ces deux arêtes est sur le foyer objet de la lentille.

Dans un autre exemple de mise en oeuvre de l'invention, le cache comporte au moins deux bords de coupure disjoints.

Si on le souhaite, les deux bords de coupure, notamment rectilignes, sont parallèles entre eux.

Le cas échéant, la distance séparant ces deux bords parallèles est notamment fonction de la focale de l'ellipsoïde qui est définie sur la section verticale de la face de sortie.

Le cas échéant, les deux bords sont de part et d'autre du foyer objet de la lentille.

Ces bords de coupure permettent par exemple de produire une coupure supérieure et une coupure inférieure afin de participer à la production par exemple d'un éclairage complémentaire de route ou d'autoroute.

Les bords de coupure peuvent être réalisés sur des pièces disjointes, qui font partie du cache.

Dans un exemple de mise en oeuvre de l'invention, le cache présente une forme de plaque, c'est-à-dire l'une de ses dimensions, par exemple son épaisseur mesurée sur l'axe optique, est sensiblement inférieure à ses deux autres dimensions.

Le cache peut présenter une forme de plaque plane ou courbée.

Si on le souhaite, le cache peut être parallèle au plan focal de la lentille.

Eventuellement, la distance entre le cache et le dioptre d'entrée de la lentille est inférieure à la moitié, ou un cinquième voire un dixième de l'épaisseur de la lentille mesurée sur l'axe optique.

Si on le souhaite, le cache peut être accolé au dioptre d'entrée de la lentille, c'est-à-dire le cache peut être par exemple en contact avec le dioptre d'entrée de la lentille.

Ceci permet à la quasi-totalité du flux de lumière émis par la source de lumière et qui n'est pas intercepté par le cache de traverser le dioptre d'entrée de la lentille, ce qui offre un excellent rendement lumineux.

Eventuellement le cache peut faire partie intégrante de la lentille.

Le cas échéant, le cache peut être surmoulé avec la lentille.

Dans un exemple de mise en oeuvre de l'invention, l'intersection du dioptre de sortie par un plan vertical contenant l'axe optique de la lentille présente sensiblement une forme en portion d'ellipse.

Le cas échéant, cette portion d'ellipse peut présenter un premier foyer confondu avec le foyer objet de la lentille.

Dans un exemple de mise en oeuvre de l'invention, l'intersection du dioptre de sortie par un plan horizontal contenant l'axe optique de la lentille est un arc de cercle. En variante, cette intersection est une courbe d'un autre type, par exemple un arc d'ellipse, un arc de parabole ou un arc d'hyperbole.

Ainsi, la trace du faisceau de lumière produit par l'unité sur un écran parallèle au plan focal de la lentille est étalée latéralement de façon homogène, c'est-à-dire cette trace ne présente pas de changement brusque d'intensité le long d'une ligne horizontale, de manière à améliorer le confort visuel du conducteur du véhicule.

La largeur, mesurée suivant une ligne horizontale, de la tache du faisceau lumineux sur un écran parallèle au plan focal de la lentille est fonction, au moins en partie, du rayon et/ou de la position du centre de cet arc de cercle.

Dans un exemple de mise en oeuvre de l'invention, le dioptre d'entrée de la lentille est agencé pour collecter la quasi-totalité, par exemple au moins 90 %, des rayons de lumière émis par la source de lumière qui ne sont pas interceptés par le cache.

Eventuellement, le dioptre d'entrée s'étend entièrement en aval de la source de lumière.

Par exemple, la lentille est notamment dépourvue de cavité recevant la source de lumière.

Si on le souhaite, le dioptre d'entrée de la lentille est plan.

En variante, le dioptre d'entrée de la lentille est une surface courbe, c'est-à-dire non contenue dans un plan.

En variante encore, le dioptre d'entrée de la lentille est une surface modulée.

Eventuellement, le dioptre d'entrée de la lentille est une surface gauche.

Dans un exemple de mise en oeuvre de l'invention, le dioptre d'entrée comporte deux facettes, notamment planes, qui forment entre elle un angle non nul et non égal à 180°.

Les deux facettes peuvent présenter des superficies différentes ou, en variante, identiques.

Ceci permet d'ajuster la largeur de la tache du faisceau lumineux sur un écran parallèle au plan focal de la lentille, au moins en partie, en fonction de cet angle et/ou des dimensions des deux facettes du dioptre d'entrée.

En variante, le dioptre d'entrée de la lentille peut former une cavité recevant au moins partiellement la source.

Dans un exemple de mise en oeuvre de l'invention, la lentille comporte, entre le dioptre d'entrée et le dioptre de sortie, une face latérale, de préférence agencée pour contenir la totalité du cône d'émission formé par les rayons lumineux émis par la source de lumière et se propageant dans la lentille.

Si on le souhaite, la face latérale comporte au moins une arête, s'étendant notamment sur toute la longueur de la face latérale.

Eventuellement, la face latérale est dépourvue d'arête, notamment s'étendant sur toute la longueur de la face latérale.

De préférence, la face latérale est sensiblement parallèle au cône d'émission formé par les rayons lumineux émis par la source de lumière et se propageant dans la lentille.

Le cas échéant, la face latérale présente une forme sensiblement divergeant vers le dioptre de sortie de la lentille.

La source de lumière comporte préférentiellement au moins une LED, monochip ou multichip.

L'invention a également pour objet un dispositif d'éclairage et/ou de signalisation, **caractérisé en ce qu'**il comporte au moins une unité optique, de préférence plusieurs unités optiques, telle(s) que définie(s) ci-dessus, cette ou ces unité(s) optique(s) étant capable(s) de produire un faisceau lumineux, et ce faisceau lumineux réalise au moins une partie d'une fonction photométrique réglementaire prédéterminée, notamment la totalité d'une fonction photométrique prédéterminée, cette fonction étant de préférence choisie parmi :
- un éclairage de route,
- un éclairage d'autoroute,
- un éclairage de croisement,
- un éclairage anti-brouillard,
- un éclairage de virage,
- un feu de jour (DRL),
- un feu de position,
- un éclairage adaptatif dynamique.

Dans un exemple de mise en oeuvre de l'invention, le dispositif comporte plusieurs unités optiques telles que décrites plus haut, et les sources de lumière de ces unités optiques sont supportées par un même support comprenant par exemple un PCB.

Le cas échéant, ce support peut être plan.

En variante, le support peut être courbe.

En variante encore, le support peut être étagé.

Dans un autre exemple de mise en oeuvre de l'invention, le dispositif comporte plusieurs unités optiques telles que décrites plus haut, et les sources de lumière de ces unités optiques sont supportées par des supports distincts.

Si on le souhaite, le dispositif comporte plusieurs unités optiques et les lentilles de ces unités présentent des formes et/ou de dimensions différentes.

En variante, le dispositif peut comporter plusieurs unités optiques et les lentilles de ces unités sont identiques.

Dans un exemple de mise en oeuvre de l'invention, le dispositif comporte plusieurs unités optiques pour produire chacune un faisceau lumineux comportant une coupure et ces coupures présentent des formes et/ou des tailles différentes.

Dans un autre exemple de mise en oeuvre de l'invention, le dispositif comporte plusieurs unités optiques pour produire chacune un faisceau lumineux comportant une coupure et ces coupures sont identiques.

Eventuellement, le dispositif est agencé pour produire au moins deux fonctions photométriques réglementaires, par exemple à l'aide de deux groupes d'unités optiques.

L'invention pourra être mieux comprise à la lecture de la description détaillée qui va suivre, d'exemples de mise en oeuvre non limitatifs de l'invention, et à l'examen du dessin annexé, sur lequel :
- les figures 1 à 3 illustrent, schématiquement et partiellement, respectivement en vue de dessus, en vue de derrière et en vue de côté, une unité optique selon un exemple de mise en oeuvre de l'invention,
- la figure 3A représente, schématiquement et partiellement, en vue de dessus, une unité optique selon un autre exemple de mise en oeuvre de l'invention,
- la figure 4 représente, schématiquement et partiellement, en vue de dessus une unité optique selon un autre exemple encore de mise en oeuvre de l'invention,
- les figures 5 à 8 représentent, schématiquement et partiellement, en vue de derrière, différents exemples de mise en oeuvre d'une unité optique selon l'invention,
- les figures 9 à 12 illustrent, schématiquement, un diagramme isolux d'un faisceau lumineux produit par une unité optique selon différents exemples de mise en oeuvre de l'invention, et
- les figures 13 à 15 représentent, schématiquement et partiellement, différents exemples de mise en oeuvre de l'invention utilisant plusieurs unités optiques.

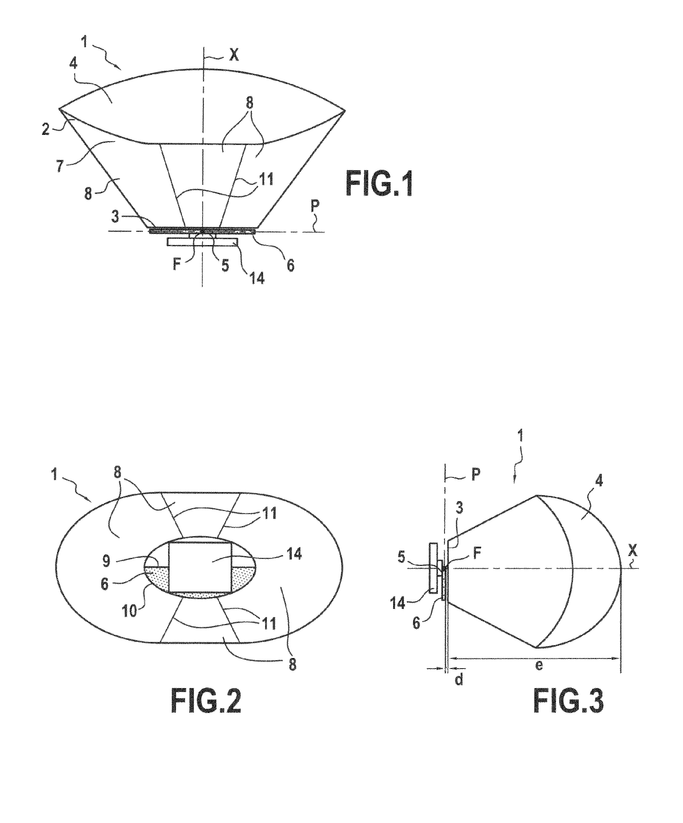

On a représenté sur la figure 1 en vue de dessus une unité optique 1 selon un premier mode de réalisation de l'invention.

Cette unité optique 1 comporte une lentille 2 présentant un axe optique X et un plan focal P.

La lentille 2 comprend un dioptre d'entrée 3 de contour sensiblement ovale, un dioptre de sortie 4 et une surface latérale 7 entre ces dioptres 3 et 4.

La lentille 2 comporte en outre un foyer objet F situé au voisinage du dioptre d'entrée 3, ce foyer objet F étant situé à l'intersection du plan focal P et de l'axe optique X.

L'unité optique 1 comporte également une diode électroluminescente 14 comprenant une surface photoémettrice 5 capable d'émettre de la lumière vers le dioptre d'entrée 3 de la lentille 2, et un cache 6 pour occulter de la lumière provenant de la surface photoémettrice 5.

La diode 14 est agencée de manière à ce que la majorité, c'est-à-dire plus de 50%, de la lumière provenant de cette diode 5 atteigne le dioptre d'entrée 3 sans être occultée par le cache 6.

La surface photoémettrice 5 est agencée parallèle au plan focal P de la lentille et coupe l'axe optique X.

Dans l'exemple décrit, le dioptre d'entrée 3 est plan et s'étend entièrement en avant de la surface photoémettrice 5.

Comme illustré sur la figure 1, l'intersection du dioptre de sortie 4 par un plan horizontal contenant l'axe optique X est un arc de cercle.

Dans ce cas, le rayon et le centre du cercle sont définis selon la répartition désirée en largeur du faisceau.

La face latérale 7 de la lentille est agencée pour contenir la totalité du cône d'émission formé par les rayons lumineux pouvant être émis par la diode 5 et traversant la lentille 2.

La face latérale 7 présente une forme sensiblement divergeant vers le dioptre de sortie 4.

Cette face 7 est formée de quatre facettes 8 jointives par des arêtes 11 s'étendant sur toute la longueur de la face 7.

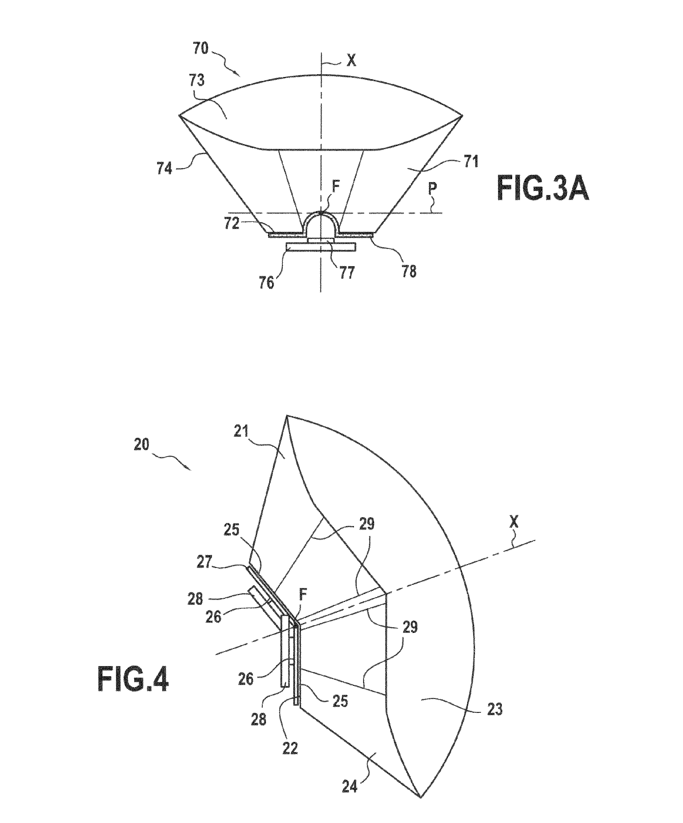

Le cache 6 présente une forme de plaque plane contenue dans le plan focal P et la distance d entre le cache 6 et le dioptre d'entrée 3 est inférieure à un dixième de l'épaisseur e de la lentille 2 mesurée sur l'axe optique X, comme on peut le voir sur la figure 3.

Dans l'exemple décrit, le cache 6 comporte une première arête rectiligne 9, présentant une longueur sensiblement identique à la largeur du dioptre d'entrée 3 de la lentille, et une seconde arête courbe 10, dont la courbure est sensiblement identique à celle du dioptre d'entrée.

La superficie du cache 6 délimitée par ces deux arête 9 et 10 est inférieure à la superficie du dioptre d'entrée 3 de la lentille.

L'arête rectiligne 9 du cache 6 passe par le foyer objet F de la lentille 2 pour former un bord de coupure 9.

Ce bord de coupure 9 permet de produire une coupure dite 'plate' dans le faisceau lumineux produit par l'unité optique 1.

Comme illustré sur la figure 3, l'intersection du dioptre de sortie 4 par un plan vertical contenant l'axe optique X est un arc d'ellipse.

Cet arc d'ellipse présente un premier foyer, non représenté, confondu avec le foyer objet F de la lentille.

Pour chaque premier point de la courbe formée par l'intersection du dioptre de sortie 4 par un plan horizontal, il existe un deuxième point **caractérisé en ce que** l'intersection du dioptre de sortie 4 par un plan vertical contenant la droite passant par ces deux points est un arc d'ellipse.

L'ensemble de ces deuxièmes points forme une courbe caractérisant la forme du dioptre de sortie 4.

Il est possible d'ajuster par exemple l'homogénéité du faisceau lumineux produit par l'unité 1 en faisant varier cette courbe.

On a représenté sur la figure 3A en vue de dessus une unité optique 70 selon un autre mode de réalisation de l'invention.

L'unité optique 70 comporte une lentille 71 présentant un axe optique X et un plan focal P et comprenant un dioptre d'entrée 72, un dioptre de sortie 73 et une surface latérale 74 entre les deux dioptres 72 et 73.

La lentille 71 comporte en outre un foyer objet F situé sur le dioptre d'entrée 72, ce foyer objet F étant situé à l'intersection du plan focal P et de l'axe optique X.

Le dioptre d'entrée 72 forme une cavité 75, s'étendant sur toute la hauteur du dioptre 72.

L'unité optique 70 comporte également une diode électroluminescente 76 comprenant une surface photoémettrice 77 capable d'émettre de la lumière vers le dioptre d'entrée 72 de la lentille 71, et un cache 78 pour occulter de la lumière provenant de la surface photoémettrice 77.

Le cache 78 est accolé au dioptre d'entrée 72 de la lentille 71, c'est-à-dire le cache 78 est en contact avec le dioptre d'entrée 72 de la lentille 71.

Le cache 78 épouse la forme du dioptre d'entrée 72 et notamment épouse la forme de la cavité 75 formée par le dioptre d'entrée 72.

Le cache 78 passe par le foyer objet F de la lentille 71.

La cavité 75 est agencée pour recevoir la totalité du flux lumineux émis par la surface photoémettrice 77 de la diode 76 et non occulté par le cache 78.

On a représenté sur la figure 4 en vue de dessus une unité optique 20 selon un autre mode de réalisation de l'invention.

L'unité optique 20 comporte une lentille 21 présentant un axe optique X et comprenant un dioptre d'entrée 22, un dioptre de sortie 23 et une surface latérale 24 entre les dioptres 22 et 23.

La lentille 21 comporte un foyer objet F situé sur l'axe optique X et au voisinage du dioptre d'entrée 22.

Le dioptre d'entrée 22 comporte deux facettes planes 25 formant entre elle un angle non nul et différent de 180°, par exemple voisin de 170°.

L'unité optique 20 comporte également deux diodes électroluminescentes 28 comportant chacune une surface photoémettrice 26 capable d'émettre de la lumière respectivement vers chacune des facettes 25 du dioptre d'entrée 23 de la lentille 21.

L'unité optique 20 comprend en outre un cache 27 pour occulter de la lumière provenant des surfaces photoémettrices 26.

Les surfaces photoémettrices 26 sont agencées respectivement parallèles à chacune des facettes 25.

La surface latérale 24 est agencée pour contenir la totalité des cônes d'émission formés par les rayons lumineux émis par les surfaces photoémettrices 26.

La surface latérale 24 comporte une pluralité d'arêtes 29 s'étendant entre les deux dioptres 22 et 23.

Le cache 27 présente une forme de plaque pliée qui suit la forme des deux facettes 25 du dioptre d'entrée 22. Ceci permet notamment de créer un faisceau dissymétrique en largeur.

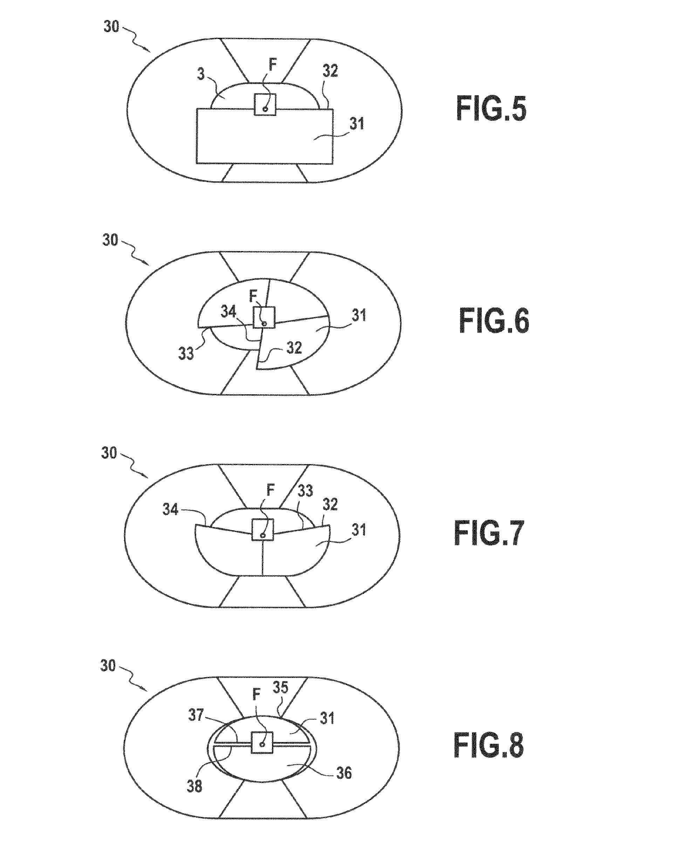

On a représenté sur les figures 5 à 8 en vue arrière différentes unités optiques 30.

Ces unités optiques 30 sont identiques à l'unité optique 1 de la figure 1 à l'exception de la forme du cache.

Sur la figure 5, l'unité optique 30 comporte un cache 31 en forme de plaque plane sensiblement rectangulaire, qui déborde latéralement du dioptre d'entrée 3.

Ce cache 31 comporte un bord de coupure 32 formé par l'arête supérieure du cache 31 passant par le foyer F.

Ce bord de coupure 32 permet de produire une coupure plate dans le faisceau de lumière pour participer à la production d'un éclairage anti-brouillard.

Dans l'exemple de réalisation de la figure 6, l'unité optique 30 comporte un cache 31 en forme de plaque plane.

Le cache 31 comporte un bord de coupure 32 formé par deux arêtes jointives 33 et 34.

La jonction de ces deux arêtes 33 et 34 est sur le foyer objet F de la lentille.

Ces deux arêtes 33 et 34 forment entre elles un angle aigu pour produire une coupure de type 'éclairage de virage' dans le faisceau.

Dans l'exemple de réalisation de la figure 7, l'unité optique 30 comporte un cache 31 en forme de plaque plane.

Le cache 31 comporte un bord de coupure 32 formé par deux arêtes jointives 33 et 34.

La jonction de ces deux arêtes 33 et 34 est sur le foyer objet F de la lentille.

Ces deux arêtes 33 et 34 forment entre elles un angle obtus pour produire une coupure de type 'croisement' dans le faisceau.

Dans l'exemple de réalisation de la figure 8, l'unité optique 30 comporte un cache 31 comportant deux pièces disjointes 35 et 36.

Le cache 31 comporte deux bords de coupure disjoints 37 et 38, réalisés respectivement sur les pièces 35 et 36.

Les bords de coupure 37 et 38 sont rectilignes, parallèles entre eux et de part et d'autre du foyer objet F de la lentille.

Ces bords de coupure 37 et 38 permettent de produire une coupure supérieure et une coupure inférieure dans le faisceau pour réaliser un éclairage complémentaire autoroute.

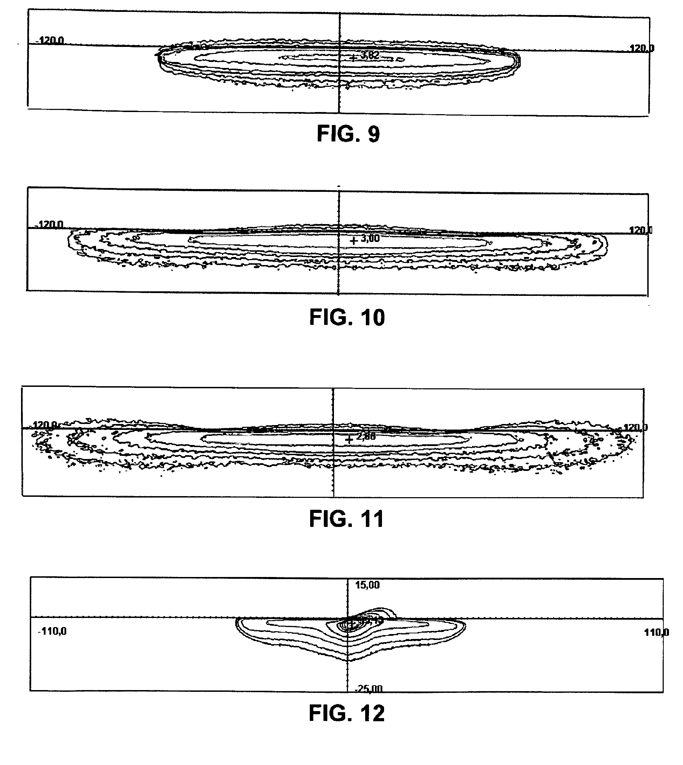

On a représenté sur la figure 9 un diagramme isolux d'un faisceau lumineux produit par une unité optique 1 selon l'exemple de réalisation de la figure 1, pour former un éclairage de route.

Ce faisceau comporte une coupure 'plate ' C.

On a représenté sur la figure 10 un diagramme isolux d'un faisceau lumineux produit par une unité optique 80, non représentée, semblable à l'exemple de réalisation de la figure 1, à l'exception de ces dimensions.

Le diagramme de la figure 10 est plus large horizontalement que celui représenté sur la figure 9.

En effet, il est possible d'ajuster l'étalement horizontal d'un faisceau en fonction, au moins en partie, du rayon et/ou de la position du centre de l'arc de cercle du dioptre de sortie 4 de la lentille 2, tel qu'on l'a représenté sur la figure 1.

L'unité optique 80 produisant le faisceau de la figure 10 comporte une lentille 81 présentant une section horizontale en arc de cercle, dont le rayon est plus grand que celui de la section horizontale du dioptre de sortie 4 de la lentille 2 de la figure 1.

On a représenté sur la figure 11 un diagramme isolux d'un faisceau lumineux produit par une unité optique 20 selon l'exemple de réalisation de la figure 4.

Le diagramme de la figure 11 est plus large horizontalement que ceux représentés sur les figures 9 et 10.

En effet, il est également possible d'ajuster l'étalement horizontal d'un faisceau, en fonction, au moins en partie, du nombre de facettes 25 que comporte le dioptre d'entrée 22 d'une unité optique 20 selon l'invention ainsi que des angles que forment ces facettes 25 entre elles.

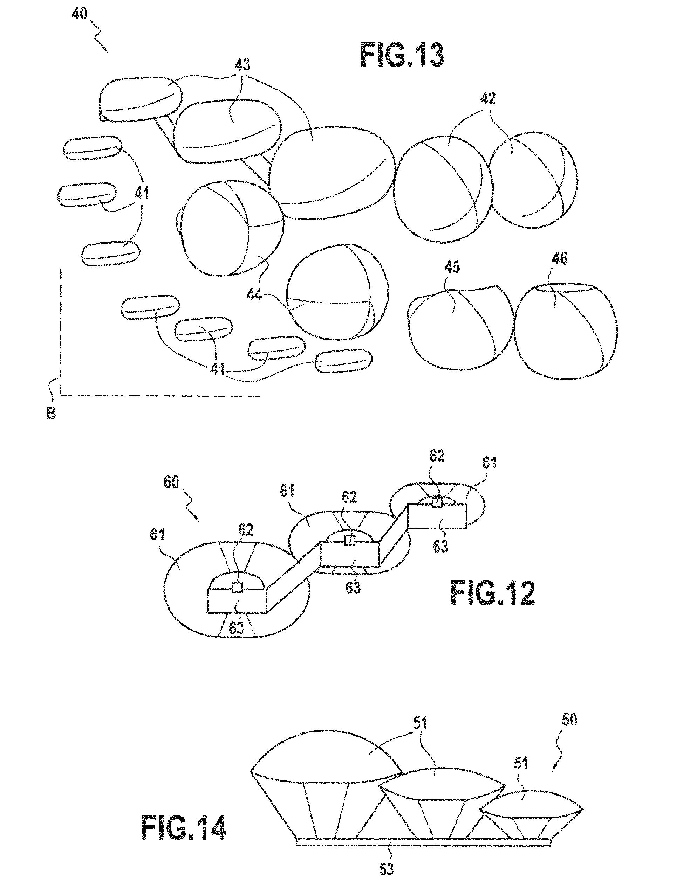

On a également représenté sur la figure 12 un diagramme isolux d'un faisceau lumineux produit par une unité optique 30 selon l'exemple de réalisation de la figure 7 pour produire un éclairage de croisement.

Ce faisceau comporte une coupure oblique C'.

On a représenté sur la figure 13 un dispositif d'éclairage et de signalisation 40 pour un véhicule automobile comportant une pluralité d'unités optiques 41 à 46, conformes à l'invention.

Le dispositif d'éclairage 40 est agencé pour être monté dans un boîtier B.

Le dispositif 40 comporte plusieurs unités optiques 41 comportant des lentilles de forme et de dimensions sensiblement identiques, ces unités 41 étant capables de produire chacune un faisceau lumineux et l'association de ces faisceaux lumineux réalise une partie d'un feu de jour, aussi appelé DRL.

Le dispositif 40 comporte également plusieurs autres unités optiques 42 comportant des lentilles de forme et de dimensions sensiblement identiques, ces unités 42 étant capables de produire chacune un faisceau lumineux et l'association de ces faisceaux lumineux réalise une partie d'un éclairage de route.

Le dispositif 40 comporte encore d'autres unités optiques 43 comportant des lentilles de forme et de dimensions sensiblement différentes, ces unités 43 étant capables de produire chacune un faisceau lumineux et l'association de ces faisceaux lumineux comporte une coupure de type 'plate' pour réaliser une partie d'un éclairage de 'croisement' ou 'antibrouillard'.

Le dispositif 40 comporte encore d'autres unités optiques 44 comportant des lentilles de forme et de dimensions sensiblement différentes, ces unités 44 étant capables de produire chacune un faisceau lumineux et l'association de ces faisceaux lumineux comporte une coupure de type 'oblique' pour réaliser une partie d'un éclairage de 'croisement', cette partie étant complémentaire à la partie produite par les unités 43.

Le dispositif 40 comporte encore d'autres unités optiques 45 et 46 comportant des lentilles de forme et de dimensions sensiblement différentes, ces unités 45 et 46 étant capables de produire chacune un faisceau lumineux pour réaliser respectivement une partie d'un éclairage d'autoroute ou une partie d'une fonction photométrique de confort.

L'unité optique 46 réalisant une partie d'une fonction photométrique est notamment mobile pour déplacer le faisceau lumineux qu'elle produit.

De manière non limitative, un véhicule peut être équipé de deux dispositifs d'éclairage et de signalisation tels que décrit ci-dessus, les fonctions photométriques réglementaires d'éclairage et/ou de signalisation que doit produire le véhicule étant réalisées de manière complémentaire par les deux dispositifs.

On a représenté sur la figure 14 un dispositif d'éclairage et/ou de signalisation 50 comportant une pluralité d'unités optiques 51 selon l'invention.

Les unités optiques 51 comportent chacune une source de lumière, non représentée ici, et ces sources de lumière sont supportées par un même support 53 comprenant par exemple un PCB.

Le support 53 est plan.

On a représenté sur la figure 15 un dispositif d'éclairage et/ou de signalisation 60, comportant une pluralité d'unités optiques 61 selon l'invention.

Les unités optiques 61 comportent chacune une source de lumière 62 et ces sources de lumière 62 sont supportées par un même support 63.

Le support 63 est étagé dans cet exemple de l'invention.

## Revendications

1. Unité optique (1), notamment pour véhicule automobile, comportant :
- au moins une lentille (2) comportant un dioptre d'entrée (3) et un dioptre de sortie (4),
- au moins une source de lumière (5) capable d'émettre de la lumière vers le dioptre d'entrée (3) de la lentille (2),
- au moins un cache (6) pour occulter de la lumière provenant de la source (5) et disposé entre la source (5) et le dioptre d'entrée (3) de la lentille (2),
**caractérisée en ce que** la lentille (2) présente un foyer objet (F) situé sensiblement sur le dioptre d'entrée (3) de la lentille (2).

2. Unité selon la revendication précédente, la lentille (2) présentant un axe optique (X), **caractérisée en ce que** le tirage de la lentille (2) est inférieur à l'épaisseur (e) de la lentille (2) mesurée sur l'axe optique (X), notamment inférieur à un cinquième ou un dixième de l'épaisseur (e) de la lentille (2), voire inférieur à un vingtième de cette épaisseur (e).

3. Unité selon l'une des revendications précédentes, **caractérisée en ce qu'**elle est dépourvue de collecteur optique, notamment de collecteur en forme de portion d'ellipsoïde, associé à la source de lumière (5).

4. Unité selon l'une des revendications précédentes, **caractérisée en ce que** la source de lumière (5) est disposée à proximité du cache (6), la distance entre la source et le cache étant notamment inférieure à 10 mm.

5. Unité selon l'une des revendications précédentes, agencée pour produire un faisceau de lumière, **caractérisée en ce que** le cache (6) comporte au moins un bord de coupure (9) contenu dans ou coupant le plan focal (P) de la lentille (2), ce bord de coupure (9) étant agencé pour produire une coupure (C) dans le faisceau.

6. Unité selon la revendication précédente, **caractérisée en ce que** le cache (6) comporte un seul bord de coupure (9).

7. Unité selon la revendication précédente, **caractérisée en ce que** le bord de coupure (9) est formé par au moins deux arêtes jointives (33,34).

8. Unité selon la revendication 5, **caractérisée en ce que** le cache (31) comporte au moins deux bords de coupure disjoints (35,36).

9. Unité selon l'une des revendications précédentes, **caractérisée en ce que** le cache (6) présente une forme de plaque.

10. Unité selon l'une des revendications précédentes, **caractérisée en ce que** la distance (d) entre le cache (6) et le dioptre d'entrée (3) de la lentille (2) est inférieure à la moitié, ou un cinquième voire un dixième de l'épaisseur (e) de la lentille (2) mesurée sur l'axe optique (X).

11. Unité selon la revendication précédente, **caractérisée en ce que** le cache (78) est accolé au dioptre d'entrée (72) de la lentille (71).

12. Unité selon l'une des revendications précédentes, **caractérisée en ce que** l'intersection du dioptre de sortie (4) par un plan vertical contenant l'axe optique (X) de la lentille (2) présente sensiblement une forme en portion d'ellipse.

13. Unité selon l'une des revendications précédentes, **caractérisée en ce que** l'intersection du dioptre de sortie (4) par un plan horizontal contenant le foyer objet (F) de la lentille (2) est un arc de cercle.

14. Unité selon l'une des revendications précédentes, **caractérisée en ce que** le dioptre d'entrée (22) comporte deux facettes (25), notamment planes, qui forment entre elle un angle non nul et différent de 180°.

15. Unité selon l'une des revendications précédentes, **caractérisée en ce que** la lentille (2) comporte, entre le dioptre d'entrée (3) et le dioptre de sortie (4), une face latérale (7), de préférence agencée pour contenir la totalité du cône d'émission formé par les rayons lumineux émis par la source de lumière (5) et se propageant dans la lentille (2).

16. Unité selon la revendication précédente, **caractérisée en ce que** la face latérale (7) présente une forme sensiblement divergent vers le dioptre de sortie (4) de la lentille (2).

17. Unité selon l'une des revendications précédentes, **caractérisée en ce que** la source de lumière (14) comporte au moins une LED, monochip ou multichip.

18. Dispositif d'éclairage et/ou de signalisation (40), **caractérisé en ce qu'**il comporte au moins une unité optique (41), de préférence plusieurs unités optiques (41), selon l'une des revendications précédentes, cette unité optique (41) étant capable de produire un faisceau lumineux, et ce faisceau lumineux réalise au moins une partie d'une fonction photométrique réglementaire prédéterminée, notamment la totalité d'une fonction photométrique prédéterminée, cette fonction étant choisie parmi :
- un éclairage de route,
- un éclairage autoroute,
- un éclairage de croisement,
- un éclairage anti-brouillard,
- un éclairage de virage,
- un feu de jour (DRL),
- un feu de position,
- un éclairage adaptatif dynamique.

19. Dispositif selon la revendication précédente, **caractérisé en ce qu'**il comporte plusieurs unités optiques (51) selon l'une des revendications précédentes et les lentilles de ces unités (51) présentent des formes et/ou de tailles différentes.
